# FASCICULE DE BREVET EUROPEEN

(11) **EP 1 344 411 B1**
(45) Date de publication et mention de la délivrance du brevet: **13.07.2005**
(21) Numéro de dépôt: 01983666.7
(22) Date de dépôt: 31.10.2001
(51) Int. Cl.: H04Q 3/00

(54) **INTERFACE DE COMMUNICATION ENTRE PCS ET PLATES-FORMES AUXILIAIRES DANS UN RESEAU RI**
KOMMUNIKATIONSSCHNITTSTELLE ZWISCHEN PCS UND HILFSBÜHNENABSTÜTZUNGEN IN EINEM INTELLIGENTEN NETZWERK
COMMUNICATION INTERFACE BETWEEN PC'S AND AUXILIARY PLATFORMS IN AN INTELLIGENT NETWORK

(30) Priorité: 03.11.2000 FR 0014103
(43) Date de publication de la demande: 17.09.2003
(73) Titulaire: FRANCE TELECOM, 75015 Paris (FR)
(72) Inventeur: BOUSSAGEON, Thierry, F-78330 FONTENAY LE FLEURY (FR); FEUILLET, Thibaut, F-14000 CAEN (FR); GRIMAULT, Jean-Luc, F-14120 MONDEVILLE (FR); KERGUTUIL, Dominique, F-78960 VOISINS LE BRETONNEUX (FR); MOREL, Thierry, F-14210 TOURVILLE SUR ODON (FR)
(74) Mandataire: Poulin, Gérard
(86) Numéro de dépôt international: PCT/FR2001/003383
(87) Numéro de publication internationale: WO 2002/037864

(56) Documents cités:
- EP-A- 0 948 216
- SILBERSTANG S D: "SERVICE CREATION FOR ADVANCED INTELLIGENT NETWORKS UTILIZING INTELLIGENT PERIPHERALS" ANNUAL REVIEW OF COMMUNICATIONS, 1996, pages 911-918, XP000620843

## Description

La présente invention concerne un dispositif et un procédé d'accès d'un utilisateur à un service RI (réseau intelligent) comportant un point de commande de services communiquant avec au moins un groupe d'entités physiques destinées à assurer au moins un premier élément du service, et avec une pluralité de plates-formes auxiliaires destinées à fournir à l'utilisateur des éléments de service additionnels complétant le premier élément du service. Le document "Service Creation for Advanced Intelligent Networks Utilizing Intelligent Peripherals", de S. D. Silberstang divulgue un dispositif et une méthode de ce genre.

Les réseaux intelligents répondent aux recommandations de l'IUT-T des séries Q.120x, Q.121x, Q.122x et Q.123x et sont nés du besoin de fournir l'accès à des services faisant appel à plusieurs applications tels que par exemple, un service vocal, un service de messagerie électronique, un service de transfert de fichiers, ou un service de traitement transactionnel, etc... en centralisant la commande de ces services. Généralement, les applications sont associées pour réaliser un nouveau service en utilisant l'architecture mise en place dans la couche application.

Afin de permettre à l'infrastructure existante dans le réseau de communication de prendre en charge les fonctionnalités du nouveau service, les réseaux intelligents mettent en oeuvre les entités fonctionnelles normalisées suivantes :
- Fonction de commande de services FCS, (SCF Service Control Function, en langue anglaise) dont l'entité physique correspondante dans l'architecture du réseau RI est un point de commande de services PCS (Service Control Point, en langue anglaise) ;
- Fonction de commutation de service FCS, (SSF Service Switching Function, en langue anglaise) dont l'entité physique correspondante est un commutateur d'accès au service CAS (SSP Service Switching Point, en langue anglaise) ;
- Fonction de données de services FDS, (SDF, Service Data Function, en langue anglaise) dont l'entité physique correspondante est une base de données de service BDS (SDP, Service Data Point, en langue anglaise) ;
- Fonction ressource spécialisée FRS, (SRF, Specialized Ressource Function, en langue anglaise) dont l'entité physique correspondante est un périphérique intelligent PI (Intelligent Peripheral).
- Fonction de gestion de service FGS, (SMF, Service Management Function en langue anglaise) dont l'entité physique correspondante est un Point dé Gestion de Service (SMP, Service Management Point, en langue anglaise).

Dans les services RI connus, une interface utilisateur mettant en oeuvre une partie importante de la fonction de commande de services FCS est prise en charge par le point de commande de services PCS. Cet interface utilisateur assure :
- l'ensemble des actions mises en oeuvre par le service pour informer un utilisateur et l'inviter à déterminer ses choix ;
- l'ensemble des actions du dispositif recueillant les choix de l'utilisateur ;
- le déclenchement et l'enchaînement de ces actions telles que les invitations et le recueil de choix ;
- l'enchaînement de ces actions avec d'autres actions du traitement d'appel du service.

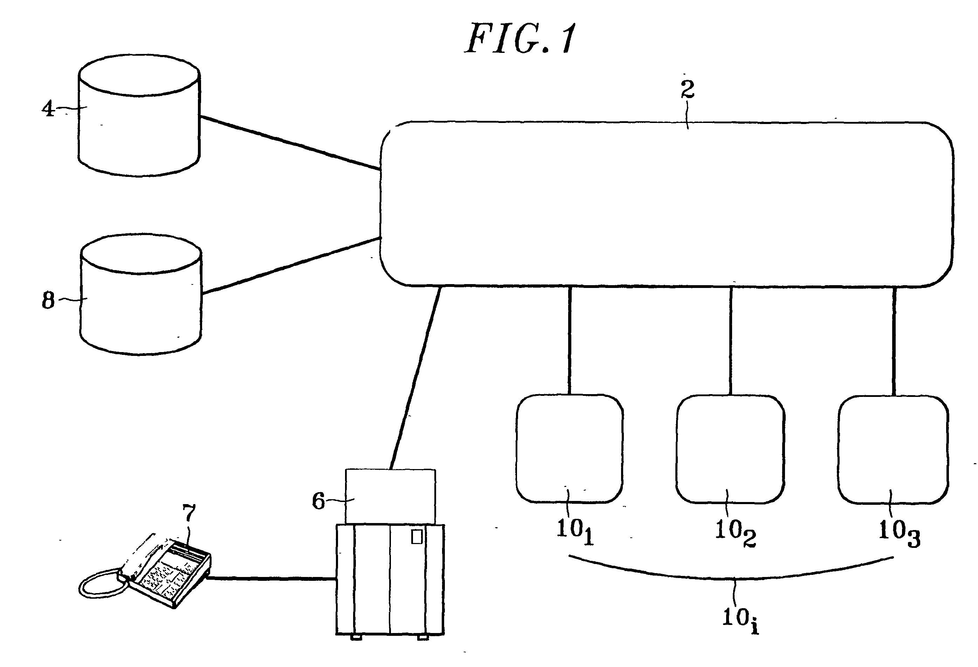

La figure 1 illustre schématiquement un dispositif connu d'accès à un service RI dans lequel un point de commande de services 2 communique avec, une base de données de services 4, un commutateur d'accès 6 auquel est connectée la ligne téléphonique 7 de l'utilisateur, un point de gestion de service 8 et une pluralité de plates-formes auxiliaires 10ᵢ. Une plate-forme auxiliaire 10ᵢ pouvant être soit un périphérique intelligent disposant de ressources spécifiques pour permettre l'adaptation des commandes de service à la demande de l'utilisateur, soit un serveur à valeur ajoutée tel que par exemple une messagerie, un point de gestion de service informant l'utilisateur sur sa consommation ou tout autre serveur. La plate-forme auxiliaire peut être également un autre point de commande de services lorsque deux réseaux intelligents sont chaînés dans un même appel.

Les ressources d'un périphérique intelligent peuvent être des annonceurs, des organes de synthèse de la parole, des organes de reconnaissance de la parole, des organes nécessaires à la réalisation d'une téléconférence, des générateurs de tonalité, des tests en synthèse de la parole ou des convertisseurs de protocole, etc....

Lorsque la plate-forme auxiliaire est un périphérique intelligent, deux cas peuvent se présenter :
- soit le point de commande de services 2 gère entièrement les fonctions de commande de services, par exemple, dans un service à carte dans lequel le point de commande de services 2 gère le lancement de la phase de saisie des chiffres de la carte et du code, le lancement de l'authentification sur la base des chiffres saisis, la vérification des droits de la carte, le lancement de la phase de saisie du numéro demandé, la vérification des droits qu'a la carte d'appeler ce numéro, l'appel du numéro ainsi que l'enchaînement sur un appel suivant.
- soit le point de commande de services 2 délègue au périphérique intelligent certaines sous-tâches plus ou moins nombreuses selon que le périphérique intelligent est utilisé en mode "pas à pas" ou en mode "script".

En mode "pas à pas", le périphérique intelligent est entièrement piloté par le point de commande de services 2 qui, dans une première commande, lui ordonne, par exemple, de transmettre un message particulier à un utilisateur, et dans une autre commande, de recueillir le choix de l'utilisateur.

En mode "script", le périphérique intelligent dispose d'une certaine latitude pour enchaîner certaines sous-tâches de l'interface utilisateur telles que par exemple l'émission d'un message d'invitation, le recueil du choix de l'utilisateur et l'émission d'un autre message d'invitation.

Dans les deux cas, le périphérique intelligent réalise la tâche demandée et rend compte au point de commande de services 2 sans jamais enchaîner de lui-même les tâches qui lui sont déléguées. En outre, le périphérique intelligent n'enchaîne jamais des phases de l'interface utilisateur avec d'autres phases du service RI. Il est utilisé uniquement comme ressource annexe du module de commande de services 2 pour assurer des fonctions spécialisées, souvent vocales.

Cette centralisation de la fonction de commande de services FCS sur le point de commande de services 2 ne permet pas une évolution rapide de l'interface utilisateur. En effet, la partie des fonctionnalités de l'interface utilisateur hébergée par le point de commande de services 2 et consistant à paramétrer, lancer et enchaîner les tâches demandées au périphérique intelligent est souvent fondue dans une application logicielle monolithique couvrant l'ensemble du traitement d'appel. Par conséquent, toute modification des fonctionnalités de l'interface utilisateur nécessite une intervention sur le module de commande de services 2, au niveau des données transmises au périphérique intelligent pour l'exécution des tâches qui lui, sont déléguées, au niveau de l'enchaînement des phases, et sur le périphérique intelligent afin de modifier les sous-tâches et le type de données attendues du module de commande de services 2. Il en résulte un manque, de souplesse dans l'évolution du service en raison de la nécessité d'effectuer des tests de non-regression dès qu'une modification est faite sur l'application logicielle du point de commande de services 2. Ceci prolonge les cycles de développement/validation.

Par ailleurs, lorsque la plate-forme auxiliaire est un serveur à valeur ajoutée, il n'existe pas de recommandations de l'IUT-T ou de normes internationales régissant les échanges. En plus, les opérateurs disposent de spécifications propres, quelques fois légèrement différentes des normes.

Lorsque la plate-forme auxiliaire est un deuxième point de commande de services; il n'existe pas de mode d'échange d'informations entre les deux points de commande de services gérant des services différents dans deux réseaux intelligents différents.

Il en résulte une hétérogénéité des interfaces de communication entre les différents plates-formes auxiliaires et le module de commande de services qui a pour effet de nécessiter le stockage dans la mémoire vive du point de commande de services 2 de plusieurs applications logicielles différentes complexifiant ce dernier et freinant l'évolution des services.

Le but de l'invention est de fournir une nouvelle répartition des fonctions de commande de services entre le point de commande de services et les plates-formes auxiliaires dans laquelle l'interface utilisateur du service Ri est déportée sur les plates-formes externes qui sont des machines spécialisées capables d'enchaîner l'ensemble des étapes de l'interface utilisateur, tout en n'étant pas tributaires des interfaces avec les autres équipements du réseau intelligent.

Un autre but de l'invention est de supprimer l'hétérogénéité des interfaces entre le module de commande de services, et les différentes plates-formes auxiliaires afin de permettre l'évolution des services sans modification des fonctions dédiées au point de commande de services.

Selon l'invention, le dispositif d'accès comporte une interface de communication permettant à une plate-forme auxiliaire d'envoyer en temps réel au point de commande de services des requêtes d'exécution d'éléments de service et de recevoir en réponse dudit point de commande de services, des données permettant l'exécution de services additionnels.

Selon l'invention, pour un service donné, les requêtes envoyée au point de commande de services présentent le même format quelle que soit la plate-forme auxiliaire émettrice, et les données envoyées par le point de commande de services à la plate-forme auxiliaire émettrice présentent le même format.

Selon l'invention, le premier élément de service demandé par la plate-forme auxiliaire au point de commande de services est soit une authentification de l'utilisateur, soit une autorisation d'accès, soit un appel d'un numéro.

Grâce à l'invention, le point de commande de services PCS est déchargé de la gestion des services additionnels qui est déportée sur les plates-formes auxiliaires. Ainsi le développement d'une nouvelle variante de service n'implique pas de modification sur le point de commande de services si cette évolution concerne uniquement l'interface utilisateur ou des services additionnels. Les développements de variantes de service sont alors facilités car plus communs sur des plates-formes externes que sur le point de commande de services.

En outre, les temps de cycles des développements de service sont réduits dans la mesure où il n'est plus nécessaire d'exécuter des tests de non-régression, sur les aspects, réseau, contrôle, taxation... du service RI, puisque ceux-ci restent pris en charge par le PCS et que ce sont uniquement les plates-formes auxiliaires qui évoluent avec l'interface utilisateur ou les services additionnels.

Par ailleurs, la généricité des requêtes de l'interface de communication selon l'invention permet de prendre en compte les différents types de plates-formes auxiliaires et en particulier de résoudre le problème de l'inter-fonctionnement des services du réseau intelligent dans le cas où la plate-forme auxiliaire est un PCS d'un autre service RI.

Le procédé d'accès d'un utilisateur au service RI comporte les étapes suivantes :
- envoi en temps réel par la plate-forme auxiliaire au point de commande de services d'au moins une requête d'exécution d'un premier élément de service dédié au point de commande service ;
- envoi par le point de commande de services à la plate-forme auxiliaire émettrice de la requête des données permettant l'exécution par cette dernière de services additionnels.

D'autres caractéristiques et avantages de l'invention ressortiront de la description qui va suivre, prise à titre d'exemple non limitatif, en référence aux figures annexées dans lesquelles :
- la figure 1 illustre schématiquement et partiellement les liaisons entre des entités fonctionnelles d'un réseau intelligent de l'art antérieur ;
- la figure 2 illustre schématiquement et partiellement les liaisons entre des entités fonctionnelles d'un réseau intelligent selon l'invention.
- la figure 3 illustre schématiquement un premier mode de communication entre une plate-forme auxiliaire et un point de commande de services selon l'invention ;
- la figure 4 illustre schématiquement un deuxième mode de communication entre une plate-forme auxiliaire et un point de commande de services selon l'invention ;
- les figures 5 à 12 et 15 et 16 représentent des tableaux illustrant les formats des données échangées entre un point de commande de services et une plate-forme auxiliaire dans une application particulière selon l'invention.
- les figures 13 et 14 illustrent l'enchaînement de deux services mettant en oeuvre le procédé selon l'invention.

La figure 1, décrite précédemment, illustre un dispositif d'accès à un service RI dans lequel un point de commande de services 2 communique avec une base de données de services 4, un commutateur d'accès 6 auquel est connectée la ligne téléphonique 7 d'un utilisateur, un point de gestion de service 8 et une pluralité de plates-formes auxiliaires 10ᵢ. Une plate-forme auxiliaire désigne indifféremment un périphérique intelligent 10₁, 10₂, un serveur à valeur ajoutée 10₃ telle qu'une messagerie vocale, un serveur vocal interactif ou un deuxième point de commande de services RI.

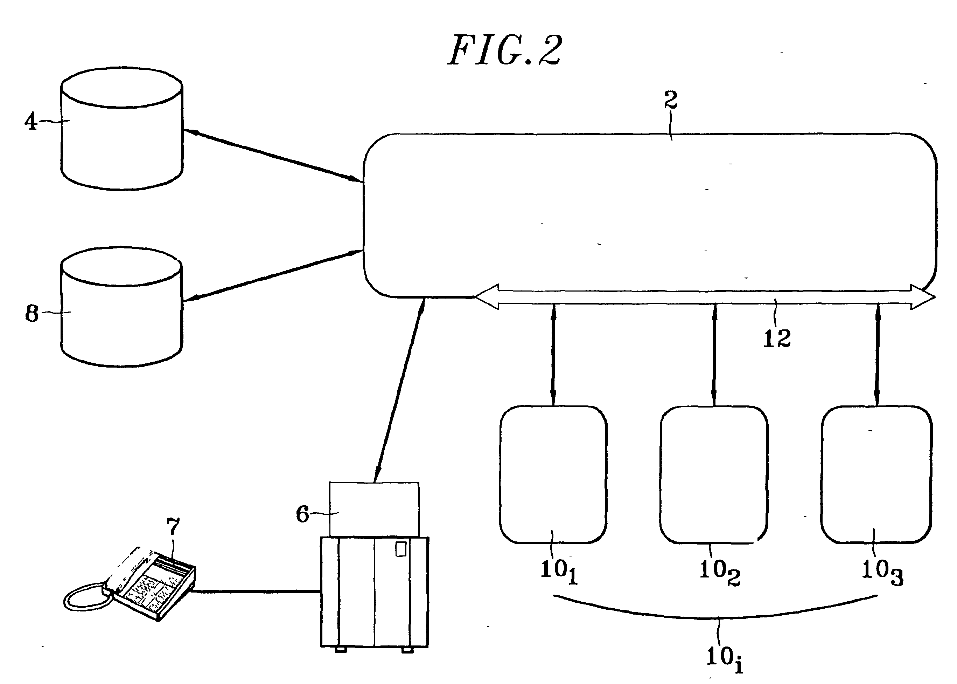

Selon une caractéristique essentielle de l'invention, illustrée par la figure 2, une interface de communication 12, agencée entre le point de commande de services 2 et les plates-formes auxiliaires 10ᵢ, permet à une plate-forme auxiliaire 10ᵢ d'envoyer en temps réel au point de commande de services 2 une requête d'exécution d'un premier élément de service. Ce premier élément de service pouvant être l'authentification de l'utilisateur, l'autorisation d'accès ou l'appel d'un numéro. Le point de commande de services 2 exécute ce premier élément de service et renvoi des données, en réponse à la requête émise pour permettre à la plate-forme auxiliaire 10ᵢ émettrice d'exécuter des services additionnels qui lui sont dédiés. La plate-forme auxiliaire transmet ensuite au PCS d'autres requêtes pour exécution par celui-ci d'éléments de service qui lui sont dédiés.

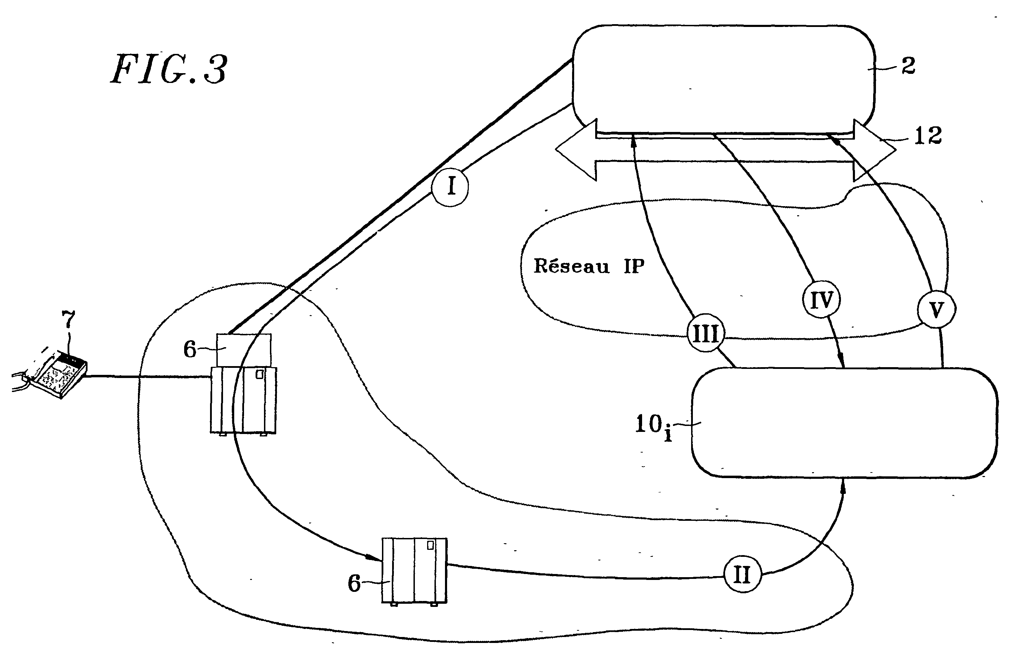

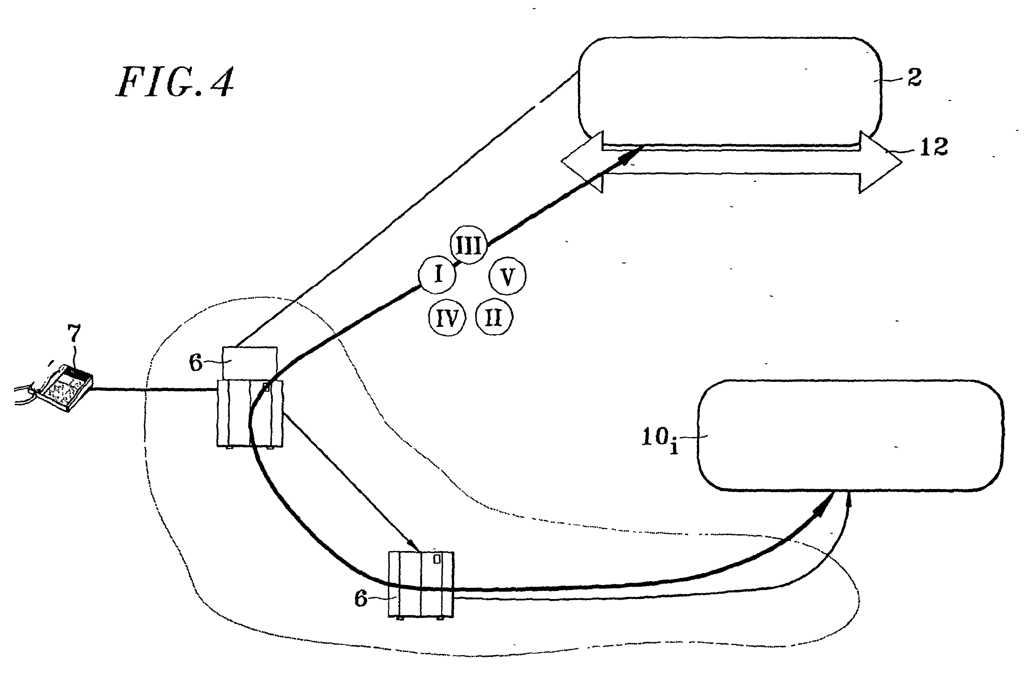

La transmission des requêtes peut être faite soit par une liaison directe, comme cela est illustré à la figure 3, à travers le protocole TCP/IP (Transmission communication Protocol/Internet Protocol, en langue anglaise) ou le protocole SS7 (Signaling System n° 7, en langue anglaise), soit par une liaison relais, comme cela est illustré à la figure 4, à travers la même voie que le circuit de parole associé. Dans ce cas, du fait que les requêtes transitent dans la signalisation de la voie de parole, la plate-forme peut aisément faire le lien entre les requêtes applicatives et la communication vocale. Ceci n'est pas le cas dans une liaison directe du fait que deux liens sont mis en oeuvre, le premier pour porter les requêtes sur réseau IP (Internet Protocol) ou sur réseau SS7 et le deuxième pour porter les signaux de la parole. Il y a donc nécessité pour la plate-forme auxiliaire 10ᵢ et le point de commande de services 2 à synchroniser les deux liens. Le mécanisme permettant cette synchronisation est basé sur l'usage d'une référence et est illustré à la figure 3 dans le cas d'une liaison IP. Ce mécanisme est le même pour une liaison directe par le protocole SS7.

En référence à la figure 3, le séquencement de la liaison TCP/IP avec usage de la référence est le suivant :
I un appel vocal est lancé par le point de commande de services 2, via le commutateur d'accès 6 vers une plate-forme 10ᵢ. Une référence "R" est placée dans la signalisation établissant cet appel, signalisation Sous Système Utilisateur RNIS National (SSURN) par exemple. Cette référence "R" constitue la référence de la future session d'échange de requêtes applicatives plate-forme auxiliaire/point de commande de services 2.
II l'appel vocal arrive sur la plate-forme qui lit dans la signalisation de la voie de parole la référence "R" de session d'échange de requêtes avec le point de commande de services 2.
III la plate-forme transmet sur le lien TCP/IP une requête Initialisation contenant la référence "R".
IV par la référence R, le point de commande de services 2 fait le lien entre l'appel en cours vers la plate-forme 10ᵢ, sur la voie de parole, et la requête Initialisation et répond à la requête Initialisation en transmettant à la plate-forme 10ᵢ, sur le lien TCP/IP, la réponse à cette requête Initialisation ; cette réponse contient également la référence "R" afin que la plate-forme 10ᵢ puisse identifier à quel appel vocal se rapporte cette réponse.
V la plate-forme 10ᵢ transmet d'autre requêtes applicatives, sur le lien TCP/IP, suivant le service qu'elle' met en oeuvre, par exemple une demande d'authentification.

Quelle que soit la requête émise sur le lien TCP/IP, elle contient la référence "R" ; la réponse transmise par le PCS sur le lien TCP/IP contient également cette référence "R". Ainsi, pendant toute la session d'échange de requêtes sur le lien TCP/IP, la plate-forme 10ᵢ et le point de commande de services 2 peuvent rapprocher la session de requêtes en cours à l'appel vocal.

Dans le cas d'un lien relais, le séquencement est le même que dans le cas du lien sur TCP/IP, sauf que la référence n'est pas utile, car la signalisation réseau fait le lien naturellement entre les requêtes et la voie de parole à laquelle se rapporte les requêtes. Les deux flux suivent en effet le même canal.

Les séquences I à V correspondent à leurs équivalents dans le mode TCP/IP illustré figure 3.

Pour mieux mettre en évidence les paramètres échangés entre une plate-forme auxiliaire 10ᵢ et le point de commande de services 2, une application particulière sera décrite dans laquelle le service intelligent est un service de télécommunication à Carte. Le point de commande de services 2 sera désigné dans la suite par l'expression PCS-Carte et les plates-formes auxiliaires 10ᵢ seront des serveurs externes désignés par l'expression SE.

En fonctionnement, le PCS-Carte répond à la requête Initialisation du dialogue entre l'application Carte et l'application hébergée par la plate-forme auxiliaire 10ᵢ en envoyant une réponse d'initialisation qui présente la structure :
- R-Initialisation_PCS = {Contexte_A, Contexte_B}
- Contexte_A = {CtxDial, CtxSrv, CtxDdr, CtxCarte, CtxInfo}
- Contexte_B = {BufferSE}

La figure 5 représente un tableau explicitant le paramètre CtxDial représentant, les données identifiant le dialogue.

Le champ Version permet de gérer deux versions de la description des requêtes simultanément, une nouvelle version N et sa version précédente N-1. Il indique à la plate-forme auxiliaire 10ᵢ dans quelle version seront transmises les requêtes jusqu'à la fin du dialogue PCS-SE.

Le numéro du service dans l'application sera déduit de l'identificateur de service IdSv par l'application de la plate-forme auxiliaire 10ᵢ si cela est nécessaire.

Si le PCS-Carte se connecte à une plate-forme auxiliaire 10ᵢ pour initier un dialogue vocal sur celle-ci,' le champ CodeReprise est absent.

Si le PCS-Carte se reconnecte à une plate-forme auxiliaire 10ᵢ pour reprendre et poursuivre un dialogue vocal, le champ EntréeDialSE est valorisé par :

EntréeDialSE = 0 si la plate-forme auxiliaire 10ᵢ est recontactée suite à saisie de « * » par le demandeur pendant le retour d'appel. Ce cas ne sera pas pris en compte pour les services utilisant de la reconnaissance vocale.

EntréeDialSE = 1 si la plate-forme auxiliaire 10ᵢ est recontactée suite à non réponse du demandé.

EntréeDialSE = 2 si la plate-forme auxiliaire 10ᵢ est recontactée suite à raccrochage du demandé (enchaînement d'appel).

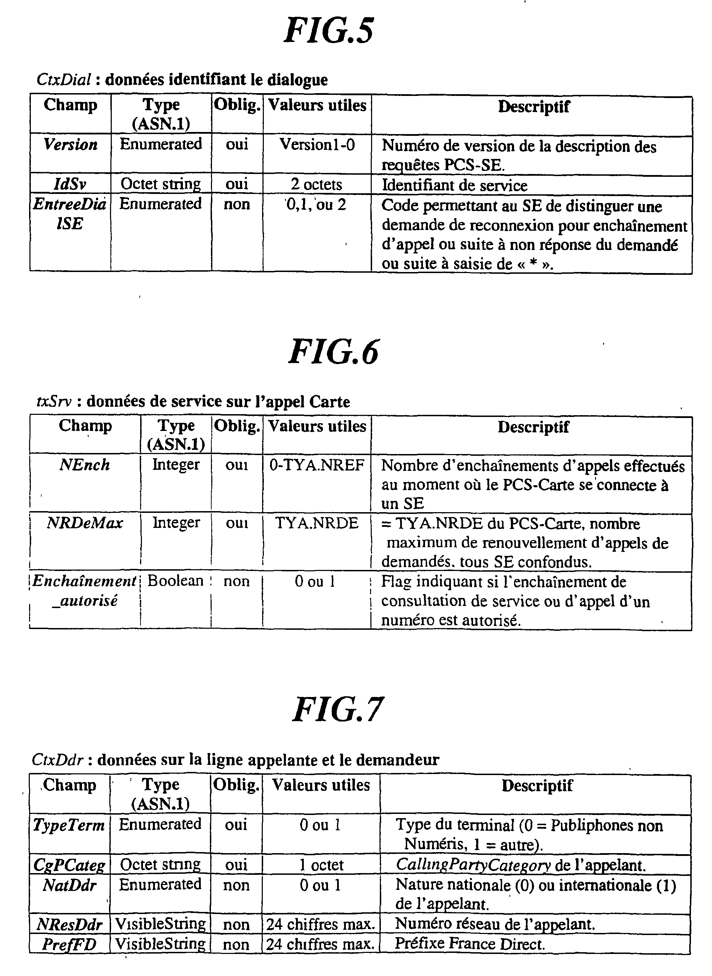

La figure 6 représente un tableau explicitant le paramètre CtxSrv représentant les données de service sur l'appel Carte.

Le paramètre NEnch indique le nombre d'enchaînements d'appels effectués sur le PCS-Carte par le demandeur avant la connexion à la plate-forme auxiliaire 10ᵢ ou entre les connexions à différentes plates-formes auxiliaires 10ᵢ. Le nombre d'enchaînements d'appels est cumulé depuis le début de l'appel Carte.

NRDeMax est le nombre maximum de renouvellements d'appels du demandé autorisés par le PCS-Carte.

La figure 7 représente un tableau explicitant le paramètre CtxDdr représentant les données sur la ligne appelante et le demandeur.

TypeTerm, CgPCateg, NatDdr, NResDdr, PrefFD sont valorisés à partir du Provide en début d'appel Carte et par l'analyse du numéro demandeur.

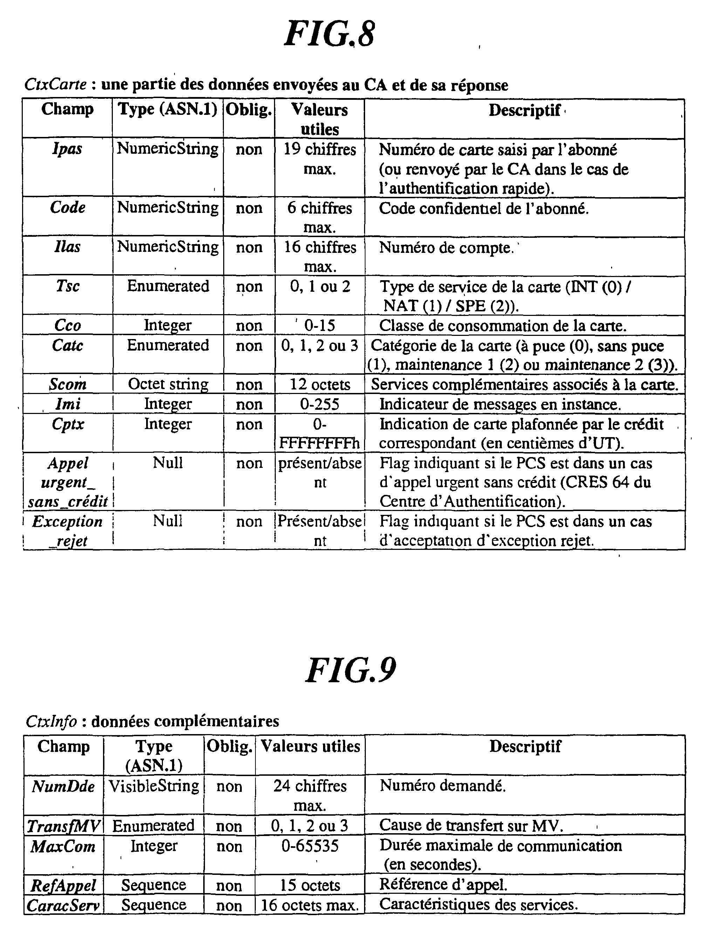

La figure 8 représente un tableau illustrant le paramètre CtxCarte représentant une partie des données envoyées au centre d'authentification CA et de sa réponse.

Ces paramètres ne peuvent être fournis que dans le cas où une saisie du carte-code et l'interrogation du Centre d'Authentification ont été effectuées par le PCS-Carte avant la connexion à la plate-forme auxiliaire 10ᵢ.

Ipas est valorisé à partir de la saisie du numéro de carte de l'abonné ou de la réponse renvoyée par le centre d'authentification CA dans le cas de l'authentification rapide.

Tous les autres champs peuvent être renseignés à partir des valeurs rendues, par le Centre d'Authentification CA.

Notons que le champ Code représentant le code confidentiel de l'abonné ne sera transmis à la plate-forme auxiliaire 10ᵢ que dans des cas très exceptionnels comme par exemple dans une application d'une plate-forme auxiliaire 10ᵢ permettant à l'abonné de modifier son code confidentiel.

La figure 9 représente un tableau explicitant le paramètre CtxInfo représentant des données complémentaires.

Le paramètre NumDde sera utile si la plate-forme auxiliaire 10ᵢ est une messagerie vocale offrant un service d'appel différé.

Le champ TransMV est également destiné à une plate-forme auxiliaire de type messagerie vocale et permet de préciser la cause du renvoi vers cette messagerie le cas échéant : non réponse, occupation, encombrement,... lors de l'appel d'un demandé.

MaxCom est la durée de communication maximale autorisée, calculée en secondes par le Serveur de Tarif (SdT) hébergé dans le point de gestion du service. Ce champ ne pourra être renseigné que si une' saisie du numéro demandé et une interrogation du point de gestion du service 8 ont été effectuées par le PCS-Carte avant la demande de connexion à la plate-forme auxiliaire 10ᵢ.

Le champ RefAppel est une chaîne de 15 octets décomposée comme suit :
- octets 1 à 5 : champ DATE = instant de début du traitement d'appel, codé en DCB selon un format MMJJhhmmss.
- octets 6 à 7 : champ CPAYS = code du pays du PCS (codé en DCB).
- octets 8 à 11 : champ IDPCS = identifiant du PCS (code SGTQS), codé en ASCII sans parité.
- octets 12 à 15 : champ REFC = référence circulaire, codée en hexadécimal.

Le champ CaracServ a une longueur de 16 octets au maximum :
- octet 1 : champ CARSRV = paramètres caractéristiques des services du Réseau Intelligent. Il est codé sur un octet de la façon suivante (A étant le bit de poids faible) :
   A = 1 , interdiction de reroutage (ex : Audiotel ou Libre Appel). Sinon A = 0.
   B = 1 , interdiction de Call Completion (ex : le 12). Sinon B= 0.
   C = 1 , AOCD (télétaxe demandée). Sinon C= 0.
   D = 1 , interdiction de parcage sans émission du signal de réponse. Sinon, D= 0.
   E, F, G, H en réserve et initialisés à 0.
   octet 2 : champ SVTR = services traversés, valorisé à 0Fh.

Le champ Contexte_B sert au point de commande de services à faire passer des données précédemment transmises par la plate-forme auxiliaire.

Ce champ est utile lorsque le point de commande de services et la plate-forme auxiliaire reprennent un dialogue après une interruption, par exemple lors d'un enchaînement d'appel. Le point de commande de services n'interprète pas ce champ qui contient des données propres à la plate-forme auxiliaire, comme l'indication d'un point de reprise dans son script de service. Notons qu'à la reprise du dialogue pour enchaînement d'appel, la plate-forme auxiliaire peut être une plate-forme du même type que celle utilisée précédemment, mais d'un exemplaire différent.

Chaque fois que le PCS-Carte souhaite libérer définitivement la connexion à la plate-forme auxiliaire 10ᵢ, il émet préalablement une requête Release PCS vers plate-forme auxiliaire. Cette requête a pour but de permettre à la plate-forme auxiliaire 10ᵢ de libérer proprement ses ressources et de pouvoir émettre, dans des cas précis, une annonce au demandeur avant que la liaison ne soit coupée par le PCS-Carte. Le PCS-Carte attendra donc toujours la réponse au Release PCS vers la plate-forme auxiliaire 10ᵢ, ou éventuellement la chute de la temporisation de non réponse à cette requête, avant d'émettre l'opération FREE sur la liaison plate-forme auxiliaire.

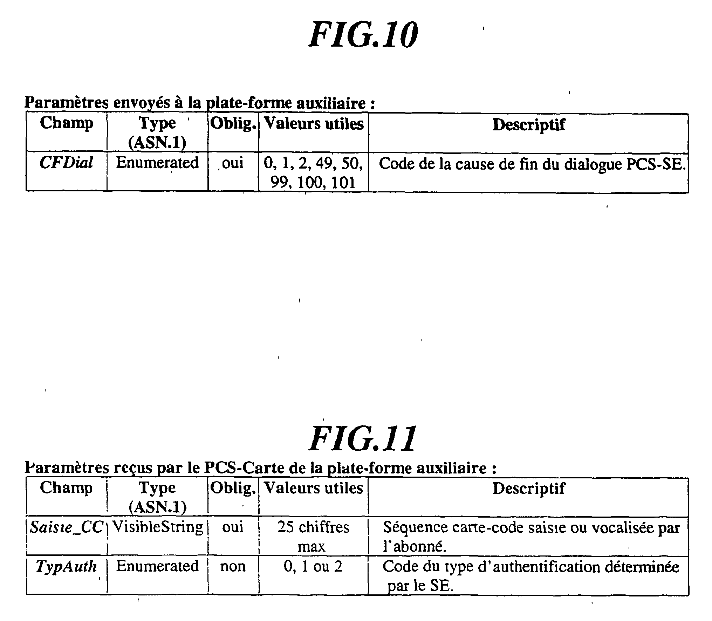

La figure 10 représente un tableau illustrant la carte des paramètres envoyés à la plate-forme auxiliaire 10ᵢ dans une requête Release PCS vers plate-forme auxiliaire.

Pour certaines causes de fin de dialogue, la plate-forme auxiliaire 10ᵢ ne pourra pas émettre de messages vocaux au demandeur. Par exemple, si la requête Release PCS vers plate-forme auxiliaire est envoyée suite à une demande d'appel d'un numéro et que le demandé décroche, il est impératif que le PCS-Carte coupe immédiatement le circuit vocal demandeur-plate-forme auxiliaire 10ᵢ (SPLIT) pour établir le circuit vocal demandeur-demandé (JOIN). La liste des codes CFDial distingue donc les cas où la plate-forme auxiliaire 10ᵢ disposera ou non du lien vocal avec le demandeur jusqu'à envoi de sa réponse :

CFDial = 0 à 49 : la plate-forme auxiliaire 10ᵢ ne dispose pas du lien vocal avec le demandeur.

CFDial = 50 à 255 : la plate-forme auxiliaire 10₁ dispose du lien vocal avec le demandeur jusqu'à envoi de sa réponse à la requête Release PCS vers plate-forme auxiliaire ; elle pourra donc émettre un message vers le demandeur.

Les codes CFDial ≥ 100 désignent les erreurs détectées par le driver de l'application Carte et remontées à l'application pour que celle-ci mette fin au dialogue entre le PCS-Carte et la plate-forme auxiliaire 10ᵢ par un Release PCS vers plate-forme auxiliaire.

Le PCS-Carte poursuit son traitement en fonction de sa cause de fin de dialogue CFDial :

Si CFDial = 0 : traitement d'attente de réponse du demandé.

Si CFDial = 1 : traitement de suivi de communication avec le demandé.

La réception de la réponse de la plate-forme auxiliaire est attendue et traitée dans les états correspondants.

Pour les autres valeurs de CFDial, le PCS-Carte attend l'acquittement de la plate-forme auxiliaire 10ᵢ avant d'enclencher un traitement de fin d'appel. Si l'acquittement de la plate-forme auxiliaire 10ᵢ n'est pas reçu, le PCS-Carte enclenche également un traitement de fin 'd'appel. Dans tous les cas, la réception de la réponse de la plate-forme auxiliaire 10ᵢ permet au PCS-Carte de libérer définitivement la liaison de la plate-forme auxiliaire 10ᵢ et de valoriser la partie de communication du service offert par cette dernière, le cas échéant de clôture et d'envoyer un détail de communication.

L'envoi de la réponse d'initialisation par le PCS-Cartes est suivi d'une succession de requêtes applicatives transmises au PCS-Cartes par la plate-forme auxiliaire. Elles sont décrites ci-après.

Bien entendu, les traitements applicatifs du PCS-Carte sur réception des requêtes de la plate-forme auxiliaire sont donnés à titre indicatif pour l'application Carte utilisant l'interface de commande selon l'invention.

Dans le cas où la requête est une demande d'authentification, une plate-forme auxiliaire 10ᵢ demande 'l'authentification d'un carte-code auprès du Centre d'Authentification de la carte via le PCS-Carte. L'acquisition des chiffres du carte-code est entièrement dédiée à la plate-forme auxiliaire 10ᵢ qui effectue les tâches suivantes :
- invitation à composer ou à vocaliser les numéros ;
- répétitions en cas de non saisie ou de non vocalisation par l'utilisateur ;
- contrôlés éventuels de format ou de longueur,... .

Notons que pour interroger un autre Centre d'Authentification des applications Cartes, une évolution de cette requête ou la spécification d'autres requêtes d'authentification éventuellement seront nécessaires, car les types de données hébergées par ces centres peuvent différer d'une application à l'autre.

La figure 11 représente un tableau explicitant les paramètres reçus de la plate-forme auxiliaire 10ᵢ pour cette demande d'authentification.

Plusieurs types d'authentification sont possibles sur le PCS-Carte. Le PCS-Carte les identifie grâce au format de la séquence carte-code saisie par l'utilisateur :
format 1 : authentification faible : « i chiffres » (i = 9 chiffres de la carte + 4 chiffres du code).
format 2 : authentification faible après passage du poste en DTMF : « # + i chiffres » ou « * + i chiffres » (i = 13).
format 3 : authentification rapide : « j chiffres » (j = 4 chiffres du code seul).
format 4 : authentification rapide après passage du poste en DTMF : « # + j chiffres » ou « * + j chiffres » (j= 4).
format 5 : authentification forte : « ## + k chiffres » ou « *# + k chiffres » (k = 19 au maximum).

Deux possibilités sont offertes aux plates-formes auxiliaires 10ᵢ :
- Soit la plate-forme auxiliaire 10ᵢ ne connaît pas les notions d'authentification faible, forte ou rapide, dans ce cas, elle envoie au PCS-Carte une séquence carte-code unique correspondant aux informations brutes saisies ou vocalisées par l'utilisateur et conçaténées en une seule chaîne (Saisie_CC), même si l'acquisition s'est déroulée en plusieurs étapes sur la plate-forme auxiliaire 10ᵢ. Le champ TypAuth est alors absent de la requête.
- Soit la plate-forme auxiliaire 10ᵢ a connaissance des quatre types d'authentification et est capable de les proposer à l'utilisateur ou de les identifier lors de la saisie/vocalisation de l'utilisateur, dans ce cas, la plate-forme auxiliaire 10ᵢ envoie au PCS-Carte le numéro de carte et le numéro de code concaténés (Saisie_CC), sans les identifiants « * », « # », « ## » ou « *# », mais accompagnés du type d'authentification reconnu par la plate-forme auxiliaire 10ᵢ TypAuth :
   TypAuth = 0 : authentification faible (format 1 ou 2).
   TypAuth = 1 : authentification rapide (format 3 ou 4) .
   TypAuth = 2 : authentification forte (format 5).

Dans les deux cas, le PCS-Carte ne reçoit pas de délimiteur de fin si la saisie est reçue en mode DTMF sur la plate-forme auxiliaire 10ᵢ.

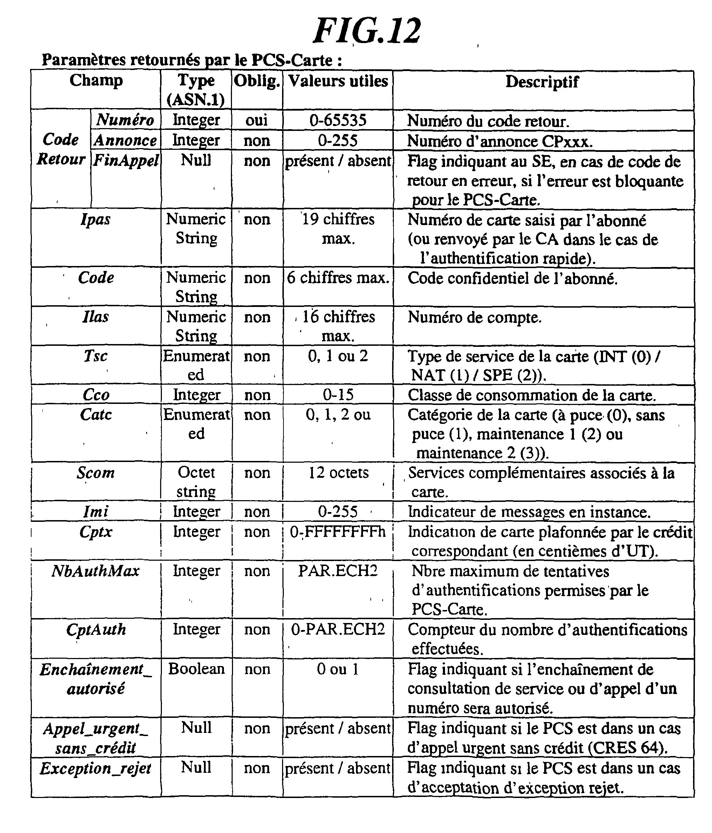

La figure 12 représente un tableau illustrant les paramètres retournés par le PCS-Carte en réponse à cette demande d'authentification.

Le paramètre CodeRetour est commun à toutes les réponses aux requêtes plate-forme auxiliaire vers PCS-Carte. Il est composé :
- d'un champ Numéro qui vaut 0 systématiquement si la requête a été traitée avec succès et une valeur positive associée à l'erreur rencontrée, sinon.
- d'un champ Annonce : il contient le numéro d'annonce OSV que jouerait le PCS dans le cas d'erreur, correspondant dans le mode sans interface de commande. Ce champ est optionnel.
- d'un champ FinAppel : positionné à NON, il permet éventuellement à la plate-forme auxiliaire 10ᵢ de poursuivre son dialogue, vocal si l'erreur n'est pas bloquante pour son traitement, et de répéter la requête ou d'en enchaîner une nouvelle (exemple : le CRES du centre d'authentification indique que le code est non concordant). Positionné à OUI il indique à la plate-forme auxiliaire que le PCS-Carte ne pourra en aucun cas poursuivre l'appel. La plate-forme auxiliaire 10ᵢ doit avertir l'utilisateur de l'erreur et envoyer une requête « Release Plate-forme auxiliaire vers PCS» (exemple : non réponse du centre d'authentification sans acceptation d'exception rejet).

Le numéro de carte Ipas est retransmis systématiquement à la plate-forme auxiliaire 10ᵢ, que celle-ci ait effectué ou non l'analyse de la séquence Saisie_CC.

Le champ Code (code confidentiel de l'utilisateur) ne sera transmis à la plate-forme auxiliaire 10ᵢ que dans des cas très exceptionnels (exemple : application de la plate-forme auxiliaire 10ᵢ permettant à l'utilisateur de modifier son code confidentiel).

Les paramètres Ilas, Tsc, Cco, Catc, Scom, Imi et Cptx sont une recopie des paramètres rendus par le Centre d'authentification. Si la Carte n'est pas plafonnée, Cptx et Imi seront absents.

NbAuthMax et CptAuth donnent la possibilité à la plate-forme auxiliaire 10ᵢ de moduler ses annonces de saisie du carte-code (première, énième ou dernière annonce), ou de proposer une aide à partir d'un certain taux d'échec.

Enchaînement_autorisé, Appel_urgent_sans_crédit et Exception_rejet sont déduits par le PCS-Carte du type de réponse du centre d'authentification CA et du contexte d'appel. Ils sont transmis à la plate-forme auxiliaire 10ᵢ pour lui permettre éventuellement d'orienter le traitement de son script vocal.

Lorsque la requête envoyée par la plate-forme auxiliaire 10ᵢ est une demande d'autorisation et de valorisation de service, le terme service de la requête désigne aussi bien un numéro de service interne à la plate-forme auxiliaire 10ᵢ, qu'un numéro demandé abouté par la plate-forme auxiliaire 10ᵢ, ou qu'un numéro demandé abouté par le PCS.

La requête d'autorisation et de valorisation, de service est envoyée par la plate-forme auxiliaire 10ᵢ pour valoriser le coût du service consulté précédent, autoriser l'utilisateur à consulter le service choisi suivant et le cas échéant, ouvrir un nouveau détail de communication DC pour ce service.

Le traitement de la requête par le PCS-Carte comporte trois parties :
- traitement de Valorisation de la communication précédente, (calcul de la durée, du coût, émission, d'un DC, décrémentation du plafond éventuel de la carte).
- traitement d'Autorisation sur le service suivant '(analyse du numéro, autorisation/traduction éventuelle au CA, requête de crédit au SdT).
- traitement d'Application de Tarif du service suivant (ouverture de son DC).

Les paramètres d'entrée de la requête (Valo, Aut, ApTar) indiqueront quels traitements seront effectués par le PCS-Carte avant l'envoi du CodeRetour .

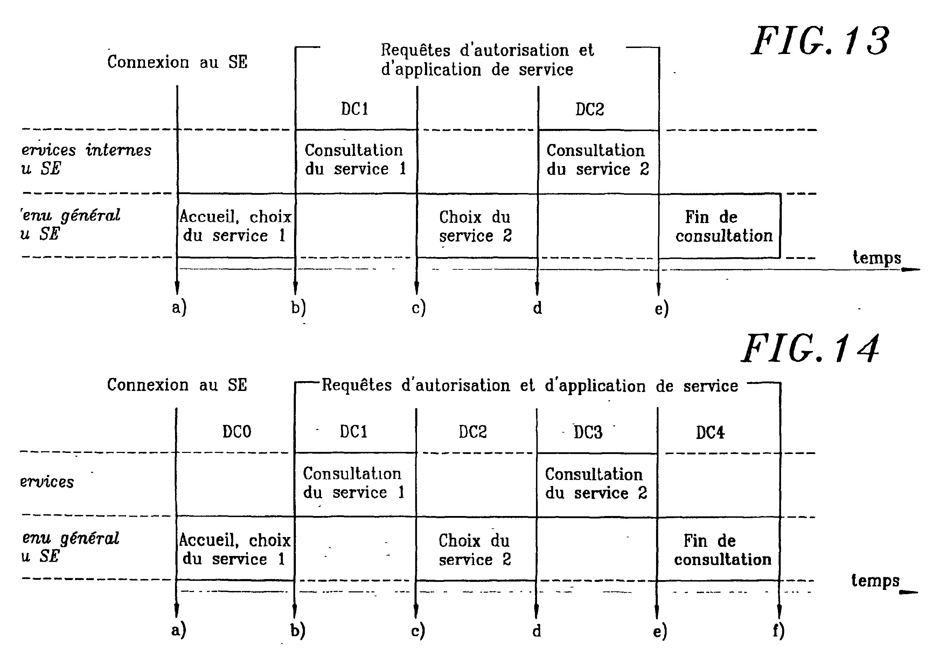

La figure 13 illustre un exemple dans lequel un abonné enchaîne deux services internes SV1 et SV2 sur une même plate-forme auxiliaire 10ᵢ d'accès gratuit comportant les étapes suivantes :
a) connexion à la plate-forme auxiliaire 10ᵢ d'accès gratuit. Aucun détail de communication (DC) n'est ouvert dans le cas de l'accès gratuit ;
b) (Valo, Aut, ApTar) = (0,1,1). Demande d'autorisation sur le service 1 et ouverture du détail de communication DC1.
c) (Valo, Aut, ApTar) = (1,0,0). Valorisation du détail de communication DC1.
d) (Valo, Aut, ApTar) = (0,1,1). Demande d'autorisation sur le service 2 et ouverture du détail de communication DC2.
e) (Valo, Aut, ApTar) = (1,0,0). Valorisation du détail de communication DC2.

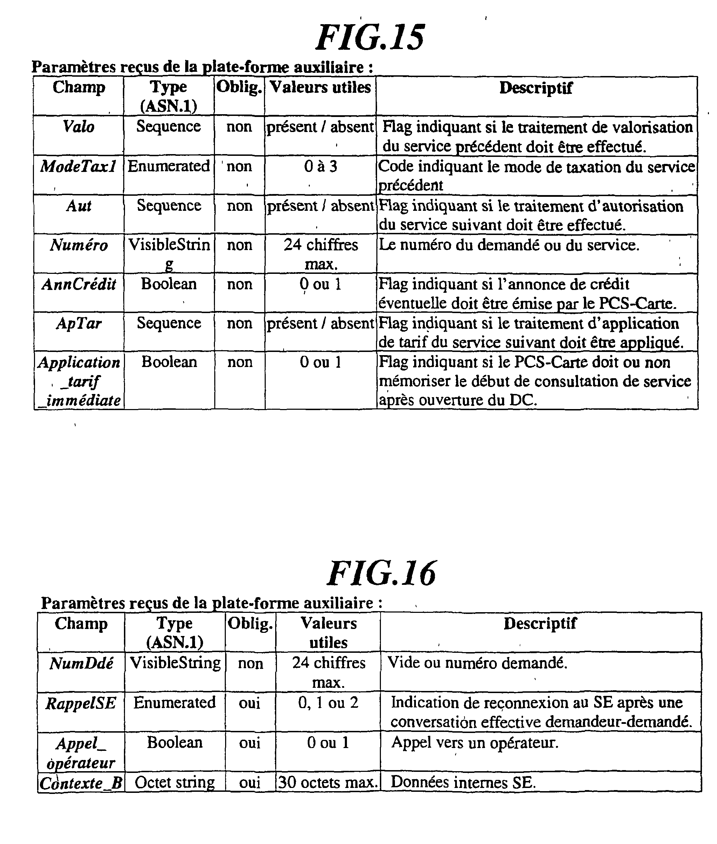

La figure 14 illustre un exemple dans lequel un abonné enchaîne deux services internes SV1 et SV2 sur une même plate-forme auxiliaire 10ᵢ d'accès payant comportant les étapes suivantes :
a) Lors de la connexion à la plate-forme auxiliaire 10ᵢ, le PCS ouvre le détail de communication DC0. Le temps de connexion à la plate-forme auxiliaire 10ᵢ est compté à partir du décrochage de la plate-forme auxiliaire 10ᵢ.
b) (Valo, Aut, ApTar) = (1,1,1). Valorisation du détail de communication DC0, demande d'autorisation sur le service 1 et ouverture du DCl.
c) (Valo, Aut, ApTar) = (1,1,1). Valorisation du détail de communication DC1, demande d'autorisation pour le retour au menu général (essentiellement pour déterminer le crédit restant d'une carte plafonnée après la consultation du service 1) et ouverture du détail de communication DC2.
d) (Valo, Aut, ApTar) = (1,1,1). Valorisation du détail de communication DC2, demande d'autorisation sur le service 2 et ouverture du détail de communication DC3.
e) (Valo, Aut, ApTar) = (1,1,1). Valorisation du détail de communication DC3, demande d'autorisation pour le retour au menu général et ouverture, du détail de communication DC4.
f) (Valo, Aut, ApTar) = (1,0,0). Valorisation du détail de communication DC4.

Notons que la référence de temps est toujours l'horloge du PCS-Carte. Les débuts et fins des consultations de services doivent être mémorisés par le PCS. La plate-forme auxiliaire 10ᵢ doit donc formuler sa requête d'autorisation et de valorisation de service en fonction de la nature du service (service interne à la plate-forme auxiliaire 10ᵢ, appel abouté par la plate-forme auxiliaire 10ᵢ ou appel abouté par le PCS-Carte) et indiquer au PCS à quel moment relever les heures. Les paramètres d'entrée concernés sont le triplet (Valo, Aut, ApTar) et l'indicateur Application_tarif_immédiate :

Dans le cas d'un service interne à la plate-forme auxiliaire 10ᵢ (menu vocal particulier de la plate-forme auxiliaire 10ᵢ), la plate-forme auxiliaire 10ᵢ doit valoriser sa demande d'autorisation et de valorisation de service avec (Valo, Aut, ApTar) = (x,1,1) et Application_tarif_immédiate = OUI. Le PCS mémorise l'heure de début de consultation du service juste après ouverture du détail de communication DC. La fin de consultation du service est indiquée par une seconde requête avec (Valo, Aut, ApTar) = (1,x,x).

Dans le cas où le service sera un appel abouté par la plate-forme auxiliaire 10ᵢ, la plate-forme auxiliaire 10ᵢ doit valoriser une première demande d'autorisation et de valorisation de service avec (Valo, Aut, ApTar) = (x,1,0). La plate-forme auxiliaire 10ᵢ aboute l'appel. Lorsque le demandé décroche, il envoie au PCS-Carte une seconde requête d'autorisation et de valorisation de service avec (Valo, Aut, ApTar) = (0,0,1) et Application_tarif_immédiate = OUI. Lorsque l'utilisateur raccroche, la plate-forme auxiliaire 10ᵢ envoie une troisième requête avec (Valo, Aut, ApTar) = (1,x,x) pour indiquer la fin de conversation au PCS-Carte.

Dans le cas où le service sera un appel abouté par le PCS-Carte : la plate-forme auxiliaire 10ᵢ doit valoriser une première demande d'autorisation et de valorisation de service avec (Valo, Aut, ApTar) = (x,1,0). Le PCS-Carte relève les instants de début et de fin de conversation sur les signaux ANM/CON et REL, sans indication de la plate-forme auxiliaire 10ᵢ.

La figure 15 représente un tableau illustrant les paramètres reçus de la plate-forme auxiliaire 10ᵢ pour cette requête d'autorisation et de valorisation de service.

Le champ ModeTax1 est valorisé par la plate-forme auxiliaire 10ᵢ selon la valeur du paramètre ModeTax2 de la requête d'autorisation et de valorisation de service précédente.

A titre d'exemple, un abonné, possédant une carte plafonnée, choisit de consulter un service payant offert par la plate-forme auxiliaire 10ᵢ. Celle-ci envoie au PCS-Carte une demande d'autorisation et de valorisation de service paramétrée avec (Valo, Aut, ApTar) = (absent, présent, présent). Le PCS-Carte effectue une interrogation SdT au cours du traitement de la requête pour connaître le mode de taxation du service et le communique à la plate-forme auxiliaire 10ᵢ dans sa réponse (ModeTax2). La plate-forme auxiliaire 10ᵢ peut utiliser ou non cette valeur dans son traitement mais elle la mémorise jusqu'à la fin de consultation du service par l'utilisateur. Une fois la consultation terminée, la plate-forme auxiliaire 10ᵢ envoie au PCS-Carte une demande d'autorisation et de valorisation de service paramétrée avec (Valo, Aut, ApTar) = (présent, absent, absent) en rappelant dans le champ ModeTax1 le type de taxation du service. Il n'y a ainsi aucune ambiguïté pour le PCS-Carte sur le mode de valorisation du service.
- ModeTax1 vaut 0 (coût normal), 1 (coût forfaitaire), 2 (gratuité) ou 3 (taxation par ITX).
- ModeTax1 est absent si Valo = 0.

Le champ Numéro accepte tous les formats possibles : national, délocalisé court ou long, spécial, international, abrégé ou privé.

Le champ AnnCrédit = 1 permet à la plate-forme auxiliaire 10ᵢ de demander à ce que l'annonce de crédit soit exceptionnellement émise par le PCS-Carte en mode Organe Serveur Vocal (OSV).

Les champs Numéro et AnnCrédit sont absents quand Aut est absent.

Le champ Application_tarif_immédiate est absent quand ApTar est absent.

Dans le cas où la requête plate-forme auxiliaire vers PCS-Cartes est une demande d'appel d'un numéro, elle prend également en compte le cas d'une demande d'acheminement vers un poste opérateur suite à une erreur de saisie ou suite à une non saisie de l'utilisateur. La plate-forme auxiliaire 10ᵢ peut ou non avoir fait précéder la demande d'appel d'un numéro par une requête d'autorisation-valorisation de service sur ce numéro. Par exemple :
- pour un numéro demandé ordinaire, la plate-forme auxiliaire 10ᵢ aura effectué une requête d'autorisation-valorisation de service sur le numéro du demandé afin de vérifier au minimum que le numéro est autorisé à l'acheminement.
- pour un numéro d'accès aux postes d'opérateurs : les numéros sont déjà disponibles dans les données d'exploitation du PCS-Carte au format réseau. Ils sont acheminables et sont utilisés dans l'opération CREATE sans analyse supplémentaire du PCS-Carte.

Dès que le retour d'appel est diffusé, la plate-forme auxiliaire 10ᵢ est libéré définitivement. Une reconnexion à la plate-forme auxiliaire 10ᵢ sera effectuée dans les trois cas suivants :
- lorsque le demandeur souhaite interrompre l'établissement d'appel en cours ;
- sur chute de la temporisation de non réponse du demandé.
- ou éventuellement, après conversation, pour proposer un enchaînement d'appel.

Le PCS-Carte indiquera à la plate-forme auxiliaire 10ᵢ que le point de reprise du script vocal est « saisie étoile », « non réponse du demandé » ou « enchaînement d'appel » par la valeur du champ entréeDialSE du Contexte_A de la réponse d'initialisation.

La figure 16 représente un tableau illustrant les paramètres reçus de la plate-forme auxiliaire 10ᵢ.

Le champ NumDdé est facultatif et au fonctionnement suivant :
- NumDdé est absent si la plate-forme auxiliaire 10ᵢ a précédemment émis une requête d'autorisation/valorisation de service. Le PCS-Carte a déjà mémorisé le numéro réseau du demandé (au format de l'opération CREATE) et sa nature (nationale, internationale, ..) après avoir analysé le champ Numéro de la requête d'autorisation/valorisation de service.
- NumDdé est absent si la plate-forme auxiliaire 10ᵢ effectue une demande d'appel vers un poste opérateur. Le champ Appel_opérateur vaut OUI dans' ce cas.
- NumDdé est directement un numéro réseau national acheminable si la plate-forme auxiliaire 10ᵢ souhaite faire établir une communication vers un numéro demandé sans autorisation/valorisation de service préalable.

Le champ RappelSE = 0 indique au PCS-Carte qu'il doit recontacter la plate-forme auxiliaire 10ᵢ après raccrochage du demandé. Si le champ RappelSE vaut 1, la plate-forme auxiliaire 10ᵢ n'est pas rappelée et les enchaînements d'appels éventuels seront proposés dans le mode sans interface de commande.

Si le champ RappelSE vaut 2, la plate-forme auxiliaire 10ᵢ n'est pas rappelée et aucun enchaînement d'appel ne sera proposé dans le mode sans interface de commande.

Notons qu'aucun enchaînement d'appel sans interface de commande (mode PCS/OSV) n'est mis en oeuvre par le PCS-Carte si la nature de la plate-forme auxiliaire 10ᵢ est de pouvoir être appelée par le PCS en mode interface de commande dès la réception du Provide-Instruction par le PCS, car dans ce cas la plate-forme auxiliaire 10ᵢ porte l'ensemble de l'interface utilisateur du service. Dans ce cas de figure RappelSE ne devra jamais être égal à 1.

Le champ Appel_opérateur permet au PCS-Carte d'effectuer certains traitements supplémentaires, particuliers au renvoi vers opérateur : recherche du numéro réseau opérateur dans les tables d'exploitation, émission d'une annonce à l'opérateur dès qu'il décroche, ...

Il est à noter que le Contexte_B contenant des informations utiles à la plate-forme auxiliaire 10ᵢ pour reprendre son script vocal devra être systématiquement transmis au PCS-Carte avec la requête d'appel de numéro, car, sur chaque appel, la plate-forme auxiliaire 10ᵢ ne sait pas si il y aura des points de reprise de type « saisie étoile » ou « non réponse du demandé ».

Par contre, la plate-forme auxiliaire 10ᵢ indiquera toujours au PCS si elle souhaite être recontactée ou non après une conversation effective demandeur-demandé, en valorisant le champ RappelSE des paramètres d'entrée de la requête d'appel d'un numéro.

## Revendications

1. Dispositif d'accès d'un utilisateur à des services intelligents d'un réseau intelligent (RI) comportant un point de commande de services (2) communiquant avec au moins un groupe d'entités physiques (4, 6, 8) destinées à fournir au moins un premier élément de service, et avec une pluralité de plates-formes, auxiliaires (10ᵢ) destinées à fournir à l'utilisateur des éléments de service additionnels complétant le premier élément de service, dispositif **caractérisé en ce qu'**il comporte en outre une interface de communication (12) permettant à une plate-forme auxiliaire (10ᵢ) d'envoyer en temps réel au point de commande de services (2) des requêtes d'exécution d'éléments de service et de recevoir en réponse dudit point de commande de services (2) des données permettant l'exécution desdits services additionnels.

2. Dispositif selon la revendication 1, **caractérisé en ce que**, pour un service donné, les requêtes envoyées au point de commande de services (2) présentent le même format quelle que soit la plate-forme auxiliaire (10ᵢ) émettrice, et les données envoyées par le point de commande de services (2) à la plate-forme auxiliaire (10ᵢ) présentent le même format.

3. Dispositif selon la revendication 1, **caractérisé en ce que** la première requête d'exécution d'éléments de service transmise par la plate-forme auxiliaire est soit une demande d'authentification de l'utilisateur, soit une demande autorisation d'accès, soit une demande d'un appel d'un numéro.

4. Dispositif selon la revendication 2, **caractérisé en ce que** les requêtes sont envoyées au point de commande de services (2) en mode direct selon le protocole TCP/IP.

5. Dispositif selon la revendication 2, **caractérisé en ce que** les requêtes sont envoyées au point de commande de services (2) en mode direct selon le protocole SS7.

6. Dispositif selon la revendication 2, **caractérisé en ce que** les requêtes sont envoyées au point de commande de services (2) en mode relais à travers le même canal que celui de la signalisation de la voix.

7. Dispositif selon la revendication 2, **caractérisé en ce que** la plate-forme auxiliaire (10ᵢ) est un périphérique intelligent,

8. Dispositif selon la revendication 2, **caractérisé en ce que** la plate-forme auxiliaire (10ᵢ) est un serveur à valeur ajoutée.

9. Dispositif selon la revendication 2, **caractérisé en ce que** la plate-forme auxiliaire (10ᵢ) est un point de commande de services d'un deuxième réseau intelligent.

10. Dispositif selon la revendication 1, **caractérisé en ce que** le groupe d'entités physiques comporte au moins une base de données de service (4), au moins un commutateur d'accès (6), et au moins un point de gestion de service (8) ou fonction équivalente hébergés dans le point de commande de services (2).

11. Dispositif selon la revendication 7, **caractérisé en ce que** le périphérique intelligent est une plate-forme d'interactions avec l'utilisateur assurant le service additionnel suivant :
a - information de l'utilisateur lors de l'utilisation du service ;
b - invitation de l'utilisateur à déterminer ses choix ;
c - recueil des choix de l'utilisateur ;
d - déclenchement et enchaînement des actions (a), (b) et (c) ;
e - enchaînement des actions (a), (b) et (c) avec d'autres actions ne relevant pas de la plate-forme mais sous-traitées au point de commande de services (2) ou aux entités physiques (4, 6, 8) via le point de commande de services (2), par le moyen des requêtes d'exécution de service transmises au point de commande de services (2).

12. Procédé d'accès d'un utilisateur à des services RI d'un réseau intelligent comportant un point de commande de services (2) communiquant avec au moins un groupe d'entités physiques (4, 6, 8) destinées à fournir au moins un premier élément de service, et avec une pluralité de plates-formes auxiliaires (10ᵢ) destinées à fournir à l'utilisateur des éléments de service additionnels complétant le premier élément de service, ledit procédé étant **caractérisé en ce qu'**il comporte les étapes suivantes :
- envoi en temps réel par une plate-forme auxiliaire (10ᵢ) au point de commande de services (2) d'au moins une requête d'exécution d'éléments de service dédiés au point de commande service (2) ;
- envoi par le point de commande service (2) à ladite plate-forme auxiliaire (10ᵢ) des données permettant l'exécution par cette dernière de services additionnels.

13. Procédé selon la revendication 12, **caractérisé en ce que**, pour un service donné, les requêtes envoyées au point de commande de'services (2) présentent le même format quelle que soit la plate-forme auxiliaire (10ᵢ) émettrice, et les données envoyées par le point de commande de services (2) à ladite plate-forme auxiliaire (10ᵢ) émettrice présentent le même format.

14. Procédé selon la revendication 12, **caractérisé en ce que** le premier élément de service exécutable par le point de commande de services (2) et demandé par la plate-foxme auxiliaire (10i) au point de commande de services (2) par le moyen d'une requête, comporte, soit une étape d'authentification de l'utilisateur, soit une étape d'autorisation d'accès à un service, soit une étape d'appel d'un numéro.

## Patentansprüche

1. Vorrichtung für den Zugang eines Nutzers zu intelligenten Diensten eines intelligenten Netzes (RI), das einen Service-Steuerpunkt (2) aufweist, der mit mindestens einer Gruppe physischer Einheiten (4,6,8) kommuniziert, die dazu vorgesehen sind, mindestens ein erstes Service-Element zu liefern, und mit mehreren Hilfs-Plattformen (10ᵢ), die dazu vorgesehen sind, dem Nutzer zusätzliche Service-Elemente zu liefern, welche das erste Service-Element ergänzen, wobei die Vorrichtung **dadurch gekennzeichnet ist, dass** sie außerdem eine Kommunikations-Schnittstelle (12) umfasst, die es einer Hilfsplattform (10ᵢ) ermöglicht, in Echtzeit dem Service-Steuerpunkt (2) Anfragen zur Ausführung von Service-Elementen zu senden und als Antwort des Service-Steuerpunkts (2) Daten zu empfangen, welche die Ausführung der zusätzlichen Dienstleistungen ermöglichen.

2. Vorrichtung nach Anspruch 1, **dadurch gekennzeichnet, dass** für einen gegebenen Dienst die zu dem Service-Steuerpunkt (2) gesendeten Anfragen das gleiche Format unabhängig von der sendenden Hilfsplattform (10ᵢ) aufweisen und die von dem Service-Steuerpunkt (2) zu der Hilfsplattform (10ᵢ) gesendeten Daten das gleiche Format aufweisen.

3. Vorrichtung nach Anspruch 1, **dadurch gekennzeichnet, dass** die erste von der Hilfsplattform übertragene Anfrage zur Ausführung von Service-Elementen entweder eine Aufforderung zur Authentifizierung des Nutzers oder eine Anfrage zur Zugangsberechtigung oder eine Rufnummernanwahl ist.

4. Vorrichtung nach Anspruch 2, **dadurch gekennzeichnet, dass** die Anfragen dem Service-Steuerpunkt (2) im direkten Modus gemäß dem TCP/IP-Protokoll gesendet werden.

5. Vorrichtung nach Anspruch 2, **dadurch gekennzeichnet, dass** die Anfragen dem Service-Steuerpunkt (2) im direkten Modus gemäß dem SS7-Protokoll gesendet werden.

6. Vorrichtung nach Anspruch 2, **dadurch gekennzeichnet, dass** die Anfragen dem Service-Steuerpunkt (2) im Relais-Modus über den gleichen Kanal wie dem der Sprachsignalisierung gesendet werden.

7. Vorrichtung nach Anspruch 2, **dadurch gekennzeichnet, dass** die Hilfsplattform (10ᵢ) ein intelligentes Endgerät ist.

8. Vorrichtung nach Anspruch 2, **dadurch gekennzeichnet, dass** die Hilfsplattform (10ᵢ) ein Mehrwert-Server ist.

9. Vorrichtung nach Anspruch 2, **dadurch gekennzeichnet, dass** die Hilfsplattform (10ᵢ) ein Service-Steuerpunkt eines zweiten intelligenten Netzes ist.

10. Vorrichtung nach Anspruch 1, **dadurch gekennzeichnet, dass** die Gruppe physischer Einheiten mindestens eine Service-Datenbank (4), mindestens einen Zugangsschalter (6) und mindestens einen Service-Verwaltungspunkt (8) oder eine äquivalente Funktion aufweist, die in dem Service-Steuerpunkt 2 untergebracht sind.

11. Vorrichtung nach Anspruch 7, **dadurch gekennzeichnet, dass** das intelligente Endgerät eine Interaktions-Plattform mit dem Nutzer ist, welche den folgenden zusätzlichen Service sicherstellt:
a - Information des Nutzers bei Nutzung des Dienstes,
b - Aufforderung an den Nutzer, seine Wahl zu treffen,
c - Sammeln der Wahlvorgänge des Nutzers,
d - Auslösen und Verbindung der Aktionen (a), (b) und (c),
e - Verbindung der Aktionen (a), (b) und (c) mit anderen Aktionen, die nicht von der Plattform herrühren, sondern am Service-Steuerpunkt (2) oder an den physischen Einheiten (4,6,8) über den Service-Steuerpunkt (2) mittels der an den Service-Steuerpunkt (2) übertragenen Anfragen zur Ausführung eines Dienstes nachbehandelt werden.

12. Verfahren für den Zugang eines Nutzers zu RI-Diensten eines intelligenten Netzes, das einen Service-Steuerpunkt (2) umfasst, der mit mindestens einer Gruppe physischer Einheiten (4,6,8), die dazu bestimmt sind, mindestens ein erstes Service-Element zu liefern, und mit mehreren Hilfs-Plattformen (10ᵢ) kommuniziert, die dazu bestimmt sind, dem Nutzer zusätzliche Service-Elemente zu liefern, welche das erste Service-Element ergänzen, wobei das Verfahren **dadurch gekennzeichnet ist, dass** es die folgenden Schritte umfasst:
- Senden mindestens einer Anfrage zur Ausführung von Service-Elementen, die dem Service-Steuerpunkt zugeordnet sind, in Echtzeit von einer Hilfsplattform (10) an den Service-Steuerpunkt (2),
- Senden von Daten durch den Servicesteuerpunkt (2) an die Hilfsplattform (10ᵢ), was die Ausführung zusätzlicher Dienste durch letztere ermöglicht.

13. Verfahren nach Anspruch 12, **dadurch gekennzeichnet, dass** für einen gegebenen Dienst die an den Servicesteuerpunkt (2) gesendeten Anfragen das gleiche Format unabhängig von der sendenden Hilfsplattform (10ᵢ) aufweisen, und die vom Service-Steuerpunkt (2) an die sendende Hilfsplattform (10ᵢ) gesendeten Daten das gleiche Format aufweisen.

14. Verfahren nach Anspruch 12, **dadurch gekennzeichnet, dass** das erste von dem Service-Steuerpunkt (2) ausführbare und von der Hilfsplattform (10i) am Service-Steuerpunkt mittels einer Nachfrage angeforderte Service-Element entweder einen Schritt der Authentifizierung des Nutzers oder einen Schritt der Zugangsberechtigung zu einem Dienst oder einen Schritt des Anrufs einer Nummer umfasst.

## Claims

1. User access device to intelligent services of an intelligent network (IN) comprising a service control point (2) that communicates with at least one group of physical entities (4, 6, 8) designed to provide at least one initial service element, and with several auxiliary platforms (10ᵢ) designed to provide the user with the additional service elements that complete the initial service element, device **characterised in that** it also comprises a communication interface (12) that allows an auxiliary platform (10ᵢ) to send the service control point (2) service element execution queries in real time, and receive the data that allows executing these additional services from this service control point (2) as a response.

2. Device according to claim 1, **characterised in that**, for a given service, the queries sent to the service control point (2) have the same format regardless of the transmitting auxiliary platform (10ᵢ), and the data sent by the service control point (2) to the auxiliary platform (10ᵢ) have the same format.

3. Device according to claim 1, **characterised in that** the initial service element execution query transmitted by the auxiliary platform is either a user authentication request, an access authorisation request, or a number call request.

4. Device according to claim 2, **characterised in that** the queries are sent to the service control point (2) in direct mode according to the TCP/IP protocol.

5. Device according to claim 2, **characterised in that** the queries are sent to the service control point (2) in direct mode according to the SS7 protocol.

6. Device according to claim 2, **characterised in that** the queries are sent to the service control point (2) in relay mode through the same channel that is used for voice signalling.

7. Device according to claim 2, **characterised in that** the auxiliary platform (10ᵢ) is an intelligent peripheral.

8. Device according to claim 2, **characterised in that** the auxiliary platform (10ᵢ) is a value-added server.

9. Device according to claim 2, **characterised in that** the auxiliary platform (10ᵢ) is a service control point of a second intelligent network.

10. Device according to claim 1, **characterised in that** the physical entity group comprises at least one access switch (6), and at least one service management point (8) or equivalent function residing in the service control point (2).

11. Device according to claim 7, **characterised in that** the intelligent peripheral is a user interaction platform that ensures the following additional service:
a - user information when using the service;
b - user invitation to determine user choices;
c - collection of user choices;
d - activation and concatenation of actions (a), (b), and (c) :
e - concatenation of actions (a), (b), and (c) with other actions that do not stem from the platform but that are outsourced to the service control point (2) or to the physical entities (4, 6, 8) via the service control point (2), through service execution queries transmitted to the service control point (2).

12. User access method to the IN services of an intelligent network comprising a service control point (2) that communicates with at least one group of physical entities (4, 6, 8) designed to provide at least one initial service element, and several auxiliary platforms (10ᵢ) designed to provide the user with additional elements that complete the initial service element, said procedure being **characterised in that** it comprises the following stages:
- real-time sending by the auxiliary platform (10ᵢ) to the service control point (2) of at least one execution query of service elements dedicated to the service control point (2);
- sending by the service control point (2) to said transmitting auxiliary platform (10ᵢ) of the data that allows the latter to execute additional services.

13. Procedure according to claim 12, **characterised in that**, for a given service, the queries sent to the service control point (2) have the same format, regardless of the transmitting auxiliary platform (10ᵢ), and the data sent by the service control point (2) to said transmitting auxiliary platform (10ᵢ) has the same format.

14. Method according to claim 12, **characterised in that** the first service element that can be executed by the service control point (2) and requested by the auxiliary platform (10ᵢ) at the service control point using a query, comprises either a user authentication stage, a service access authorisation stage, or a number call stage.
